# EUROPEAN PATENT APPLICATION

(11) **EP 1 942 692 A1**
(43) Date of publication of application: **09.07.2008**
(21) Application number: 07000287.8
(22) Date of filing: 08.01.2007
(51) Int. Cl.: H04Q 7/38

(54) **Methods for processing of subscriber related data in a telecommunication network**

(71) Applicant: Nokia Siemens Networks GmbH & Co. KG, 81541 München (DE)
(72) Inventor: Schott, Markus, 81675 München (DE); Unbehau, Peter, 36251 Bad Hersfeld (DE)

(57) **Abstract**

The invention relates to a method for processing of subscriber related data in a telecommunication network, comprising the steps of: creating a root data set comprising an unique identification (IMSI) that is associated with a subscriber (10) and at least one parameter being necessary for authentication and encrypting purposes in the telecommunication network, wherein the root data set is associated to the subscriber (10); storing the root data set in a database being accessible by a component (13) of the telecommunication network; provisioning of subscriber related data being necessary for the subscriber (10) for using services of the telecommunication network when the subscriber (10) tries to register to the telecommunication network for using services of the telecommunication network; and storing the provisioned subscriber related data in the database wherein the root data set is completed with the subscriber related data to a subscriber data set.

## Description

The invention relates to methods for processing of subscriber related data in a telecommunication network, especially in a mobile telecommunication network.

In a telecommunication network according to the 3GPP standard a Home Location Register (HLR)/Home Subscriber Server (HSS) are the central logical database for subscriber related data. Before a subscriber can use any circuit switched (CS) or packet switched (PS) enabled services the HLR/HSS must be provisioned with CS/PS subscriber related data or information. Such subscriber related data comprises for example a unique identification (International Mobile Subscriber Identity, IMSI), a number which is used to refer to a particular subscriber (Mobile Station Integrated Service Digital Network, MSISDN or Integrated Service Digital Network, ISDN) as well as additional service dependant parameters. The MSISDN is mobile equivalent of ISDN. MSISDN refers to a number that is used to refer to a particular mobile station. The IMSI is a unique number that is associated with all GSM (Global System for Mobile Communications) and UMTS (Universal Mobile Telecommunications Systems) network mobile phone users. The number is stored in a so called subscriber identity module (SIM). It is sent by the mobile phone to the network and is also used to acquire other details of the mobile phone in the HLR or as locally copied in the so called visitor location register (VLR). In order to avoid that the subscriber being identified and tracked on the radio interface, the IMSI is sent as rarely as possible and randomly generated TMSI is sent instead.

The act of provisioning subscriber related data usually takes place before the subscription contracts are sold in stores. Consequently, resources have to be allocated at the time of provisioning in order to guarantee that the system can handle all provisioned subscribers. A disadvantage of this proceeding is that there is made no distinction between subscriptions that are already in use and subscriptions that are still in the supply chain in stores. As a result the step of explicit provisioning of subscriber related data increases the costs of an operator two-fold: first, resources need to be provided at the time of provisioning, and second the act of provisioning is to be done manually or at least partly manually.

Furthermore, there are so called prepaid subscriptions. Prepaid subscriptions are often used for "backup" or "emergency" purposes. As a result, the activity of subscribers using prepaid cards is often very low and the revenue generated by these subscribers is small. A part of these prepaid subscriptions are not used at all for long time periods. This means, the terminals, e.g. mobile phones or handsets, are turned off and no activity in the mobile telecommunication network occurs. However, the system resources must be available at all the time in order to guarantee the offered services. Operators of the mobile telecommunication networks do accept a certain time period of inactivity. After that time period, the subscriber is informed that he needs to re-activate his subscription by charging his prepaid account. If the subscriber does not so, the subscription is manually removed from the system. This handling has become a legal issue in Germany and might become a legal issue in other countries as well.

It is therefore an object of the present invention to provide methods for processing of subscriber related data in a telecommunication network, especially a mobile telecommunication network, which enables a more efficient use of the resources of the telecommunication network.

This object is solved with the methods according to the independent claims. Further developments of the invention are specified in the dependent claims.

According to a first aspect of the invention, a method for processing of subscriber related data in a telecommunication network, especially a mobile telecommunication network, comprises the steps of: creating a root data set comprising a unique identification that is associated with a subscriber and at least one parameter being necessary for authentication and encrypting purposes in the telecommunication network, wherein the root data set is associated to the subscriber; storing the root data set in a database being accessible by a component of the telecommunication network; provisioning of subscriber related data being necessary for the subscriber for using services of the telecommunication network when the subscriber tries to register to the telecommunication network for using services of the telecommunication network; and storing the provisioned subscriber related data in the database wherein the root data set is completed with the subscriber related data to a subscriber data set.

According to this first aspect of the invention, the subscriber data sets are not created in advance anymore but rather at the time the subscriber starts his service in the telecommunication network. By this way resources are saved and the administrative act of provisioning is reduced to entering the subscribers root data into the system. The very small root data set with the subscriber's security credentials will be created in the system by the operator of the telecommunication network. This root data set requires minimum resources in the HLR/HSS. Due to the provisioning of subscriber data in the moment, in which these data are needed in the telecommunication system, resources for a dynamic HLR/HSS server capacity, a server memory, disk space as well as SS7 resources can be saved. Furthermore, a new license model can be applied. Licenses for third party software, e.g. database, SS7 subsystem, have to be paid for fully provisioned subscriber data sets only. This way no licenses need to be paid for subscriber contracts that are still in the supply chain. This might be the case for prepaid subscriptions or postpaid subscriptions that are for sale in stores. Furthermore, the subscriber related data might be provisioned automatically. This allows for savings in OPEX (Operational Expenditure) costs since the task of final provisioning is performed automatically by the resources of the telecommunication network.

According to a further embodiment the step of provisioning of subscriber related data comprises an authentication of the subscriber to the communication network thereby using data of the root data set. Besides the IMSI, the root data set comprises for example a master key that is necessary for all authentication steps. The data within the root data set are necessary and sufficient for the authentication procedure. The root data set can be stored in a database associated to the HLR/HSS or optionally be loaded from an external database. Data and information stored in the external data base can be of such kind which are not needed for using services in the telecommunication network.

According to a further embodiment of the invention the step of provisioning of subscriber related data comprises sending a message to the component of the telecommunication network by the subscriber for trying to register to the network; accessing the database by the component and searching for the subscriber data set for this specific subscriber, wherein, if the subscriber data set cannot be found, it is checked whether a root data set for this specific subscriber can be found; and creating subscriber related data, in case the root data set could be found. Sending a message to the component of the telecommunication network by the subscriber can be the receiving of a MAP message UpdateLocation or UpdateGprsLocation, respectively, by the HLR/HSS. If the HLR/HSS cannot find the subscriber HLR/HSS data set (the subscriber data set), it checks whether a root data set for the IMSI is present. If the root data set is present, the HLR/HSS creates the subscriber data set.

According to another embodiment of the invention the step of provisioning of subscriber related data is only executed after a successful authentication of the subscriber to the communication network.

According to another embodiment of the invention the subscriber related data to be provisioned comprises a number which is used to refer to a particular subscriber, e.g. the MSISDN or ISDN, and which is taken from a number pool.

According to another embodiment of the invention the subscriber related data to be provisioned comprises a number which is used to refer to a particular subscriber, e.g. the MSISDN or ISDN number, and which already has been assigned to the subscriber and which is retrieved from the number pool using the identification as a key. In the latter case the MSISDN can be retrieved from the number pool using the unique identification (IMSI) as a key. An advantage of this proceeding is that the number of reserved MSISDN's is reduced meaning that the operator can save the amount of MSISDN's. Only the MSISDN's of the MSISDN number pool are reserved. However, this is only a small subset of today's predefined MSISDN's of inactive subscribers.

According to another embodiment of the invention the subscriber related data are created by using one of amount of predefined subscription templates. The predefined subscription templates can be already assigned to the subscriber and used in the subscription process.

After creation of the subscriber data set a component of the telecommunication network, e.g. the HLR/HSS, processes the registration messages as defined in GSM or UMTS-standards. At this point in time the provisioning task is completed.

According to a second aspect of the invention, a method for processing of subscriber related data in a telecommunication network, especially a mobile telecommunication network, comprises the steps of: providing a subscriber data set associated to a subscriber's subscription having a root data set comprising an unique identification that is associated with a subscriber and at least one parameter being necessary for authentication and encrypting purposes, and subscriber related data, wherein the subscriber data set is stored in a database be accessible by a component of the telecommunication network; observing for a command indicating that a particular subscription of a subscriber has to be removed; and removing of the subscriber related data from the subscriber data set stored in the database when receiving the command in order that the root data set remains as the subscriber data set.

With the method described a partial removal of inactive prepaid subscriptions can be achieved. The data sets of subscribers, e.g. prepaid subscribers, that remain inactive for a certain time period are partially removed from the telecommunication network. The status of being inactive can be a turned off handset or no signaling traffic in the telecommunication network. The method can be advantageous when the operator of the telecommunication network decides that the subscription of a prepaid subscriber has to be removed from the productive database being accessible by HLR/HSS. The criterion for a removal of parts of the subscription data can be that a subscription has expired for inactivity reasons. Optionally the procedure can be automatically started, e.g. based on the time duration in which the subscriber did not perform any activity in the telecommunication network.

According to an embodiment the command is generated automatically by the telecommunication system according to the fulfillment of a condition. A condition could be the time duration until the last activity time.

According to another embodiment the root data set is moved towards a further database and stored in the further database. Moving the root data set towards a further database which is not the productive database (coupled and accessible by the HLR/HSS) has the advantage that the system resources of the telecommunication network can be minimized.

According to another embodiment the subscriber related data comprises a number which is used to refer to a particular subscriber, e.g. the MSISDN or ISDN number, and which has been assigned to the subscriber to use services of the telecommunication network and therein a number is released to a number pool. A released number might be used for another subscription process.

According to another embodiment of the invention the released number is marked with the unique identification, e.g. IMSI, for keeping the number available for a reallocation for the respective subscriber. This might be an option for the operator of the telecommunication network if the operator allows for the reactivation of an expired subscription.

In case of a complete subscription removal, it is possible to remove the root data set using a provisioning interface. It is also possible to remove a correlation between the unique identifier and the number which is used to refer to a particular subscriber in the number pool by issuing a command at the provisioning interface.

According to another embodiment of the invention the subscriber having the root data set as the subscriber data set stored in the database or the further database is marked as inactive subscriber. The separation of subscribers in active and inactive subscribers is useful for the operator because he is kept informed about the number of active and inactive subscribers in the telecommunication system using the service interface to the component of the telecommunication network, e.g. HLR/HSS. Optionally, license costs that depend on the number of subscribers can be adjusted accordingly. As a result, the partial removal of subscription data for inactive subscribers thus saves a considerable amount of HLR/HSS resources. It is avoided that subscription data sets of inactive subscribers do consume HLR/HSS resources and do generate license costs.

From the time subscriber related data are partially removed or a subscriber is marked as inactive the subscriber does not appeal as an active subscriber anymore. Therefore, system resources are released.

According to another embodiment the subscriber can become an active subscriber by re-provisioning of its subscriber related data in the telecommunication network according to the first aspect of the invention. If a prepaid subscriber that has partially removed from the HLR/HSS for inactivity reasons becomes active again, e.g. by turning on subscriber's handset and registering to a network, his account and subscriber related data, respectively, can automatically be re-provisioned. The re-provisioning is identical to the automatic provisioning procedure as described before.

An association between the subscriber's unique identification and the number which is used to refer to a particular subscriber in the number pool guarantee that a subscriber will be provisioned with the number that he has owned before.

By partially removing of the subscriber related data from the subscriber data set profile settings of the subscription e.g. for call forwarding or call barring, are lost in the procedure of removal and restoration. They have to be reentered by the subscriber. Optionally the subscriber can be informed about the loss of certain profile settings by issuing a short message.

As another aspect of the invention, a computer program product comprises program code means stored on a computer readable medium for performing the method of the method according to the first aspect of the invention when said program product is run on a computer.

As another aspect of the invention, a computer program product comprises program code means stored on a computer readable medium for performing the method of the second aspect of the invention when said program product is run on a computer.

The present invention is described in further detail below, by way of example, with reference to the following drawing in which:
- Fig. 1: shows the provisioning of subscriber related data within a first attached procedure according to the invention, and
- Fig. 2: shows the provisioning of subscriber related data of a subscription with a subscriber selected MSISDN and/or selected service profile template according to the invention.

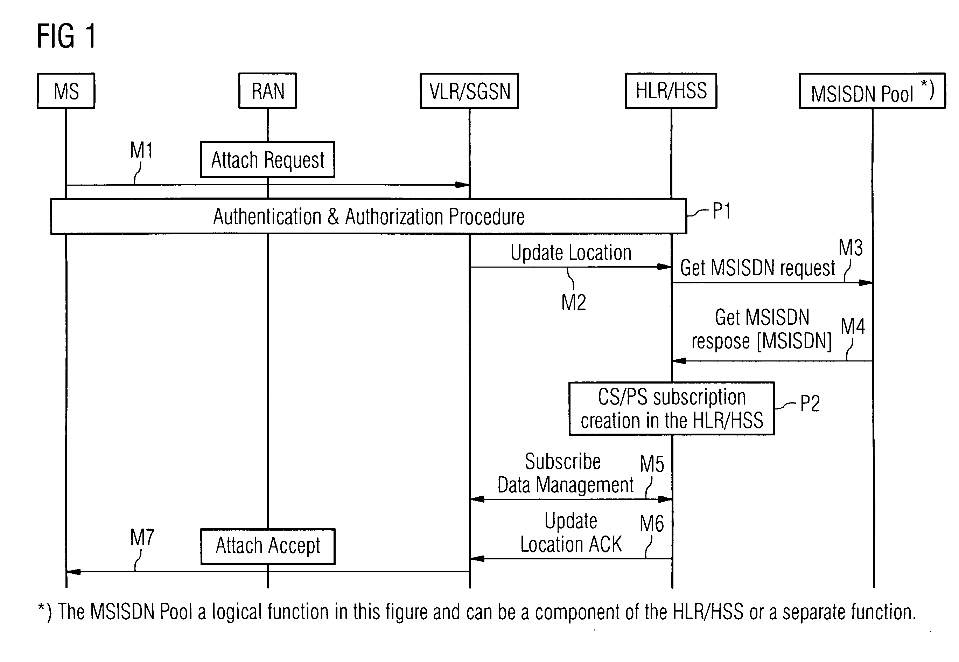

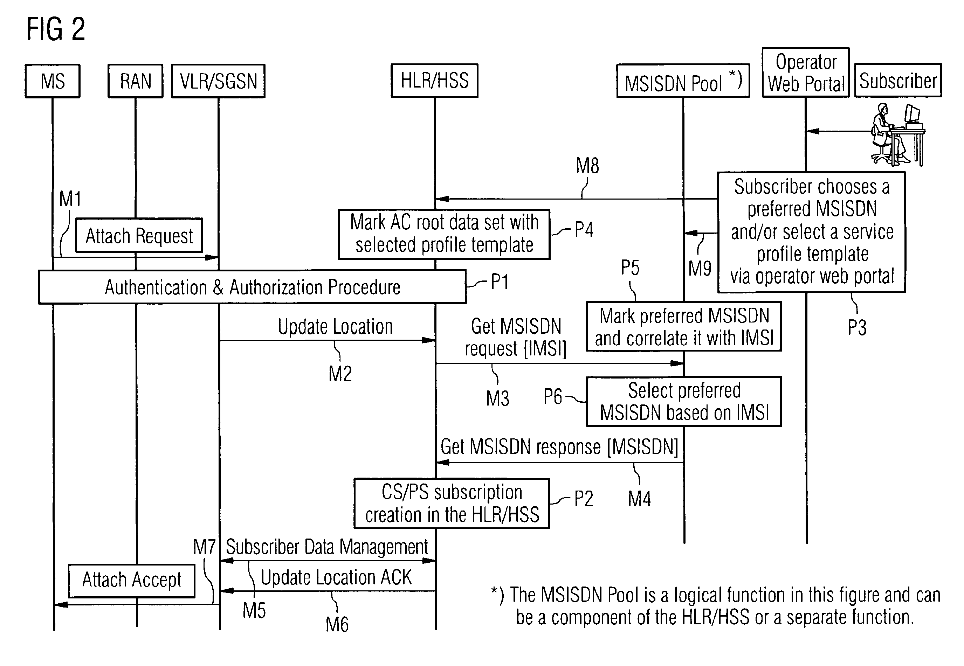

Figs. 1 and 2 show the provisioning of subscriber related data according to the invention. The provisioning of subscriber related data takes place in the moment these data are needed for communication purposes and for using services of the telecommunication network in the telecommunication system. Therefore, only a very small data set, called root data set, comprising IMSI as a unique identification that is associated with a subscriber and at least one parameter, e.g. a master key, being necessary for authentication and encryption purposes will be created in the system by the operator. The root data set therefore requires only minimum resources and is stored within a database (a so called productive database) being accessible by a HLR/HSS. The root data set can optionally be created outside of the productive HLR/HSS using an external database. Choosing this option, the resources in the productive HLR/HSS remain unaffected by the creation of the root data set. The actual provisioning takes place when the subscription has been sold and the subscriber wants to register to the telecommunication network. Fig. 1 shows the basic provisioning procedure.

A mobile subscriber MS authenticates itself to the telecommunication network by sending a message M1 which is known as "attach request". The message M1 is sent from the mobile subscriber MS to a visitor location register VLR and a serving GPRS support note SGSN, respectively. The message M1 thereby is transported via a radio access network RAN. For carrying out an authentication procedure P1 the data of the root data set is sufficient. In case, the root data set is stored in the external database (being not a part of the productive home location register HLR/HSS) the root data set can be loaded from the external database and stored in the productive data base.

After the mobile subscriber MS has itself successfully authenticated to the telecommunication network, the mobile subscriber tries to register to the telecommunication network. Therefore, the HLR/HSS receives a message M2. Message M2 is a MAP message (MAP = Mobile Application Part) of the type "update location" and "update GPRS location", respectively. The message M2 is sent from the VLR/SGSN to the HLR/HSS.

If the HLR/HSS cannot find a subscriber data set comprising besides the root data set subscriber related data, HLR/HSS checks whether a root data set for the IMSI is present. If the root data set is present, the HLR/HSS creates a subscriber data set, thereby using one of an amount of predefined templates. By using a predefined template subscriber related data can be added to the root data set to become a subscriber data set. Therefore, it is necessary to send a message M3 to a MSISDN pool ("get MSISDN request"). As an answer of this request a message M4 is sent to the HLR/HSS wherein HLR/HSS receives an MSISDN (or multiple MSISDN's in case of multi numbering subscribers). After having received the MSISDN a subscription procedure P2 is carried out. Within this subscription procedure P2 with this subscriber data set is created. The subscription can be of the circuit switched-type (CS) or the package switched-type (PS).

Provisioning of the subscriber related data is done by using predefined subscription templates. After creation of the subscriber data set the HLR/HSS processes the registration message M1 as defined in the GSM- or UMTS-standards. Therefore, HLR/HSS sends a message M5 ("subscriber data management") and a message M6 ("update location ACK") to the VLR/SGSN. Message M7 ("attach accept") is sent to the mobile subscriber MS, thereby using the radio access network RAN. At this point the provisioning task is completed.

Fig. 2 shows the provisioning procedure of fig. 1 wherein the MSISDN has already be assigned to the subscriber. The assigning can take place via an operator web portal. The subscriber chooses a preferred MSISDN and/or selects a service profile template. Within a message M8, which is sent from the operator web portal to the HLR/HSS, a procedure P4 is started wherein a root data set with a selective profile template is marked. A message M9 is sent from the operator web portal to the MSISDN pool wherein the preferred MSISDN chosen by the subscriber is marked and brought into correlation with IMSI of the root data set. When MSISDN pool receives Message M3 sent by HLR/HSS the preferred MSISDN based on IMSI is selected within a procedure P6. As a result the preferred MSISDN is sent from the MSISDN pool to the HLR/HSS within the message M4. After having received the appropriate data the subscriber data set is created and the HLR/HSS processes registration as explained in conjunction with Fig. 1.

The self-provisioning as described can be useful in connection with a partial removal of inactive prepaid subscription. The removal of inactive prepaid subscriptions takes place when the operator of the telecommunication network decides that a subscription of a prepaid subscriber has to be removed from the productive HLR/HSS. This might be the case, when the subscription has expired for inactivity reasons. Optionally the procedure can be automatically started based on a time duration in which the subscriber did not perform any activity in the telecommunication network. The procedure of removal of inactive prepaid subscription is described below.

The operator issues a "purge" command for a particular IMSI using the provisioning interface. Optionally this command can be issued automatically by an audit. This audit periodically searches the HLR/HSS database for subscriptions that has been inactive for a certain period of time. The audit uses a "last activity" time stamp which is part of the subscriber's data set. The command removes the subscriber's HLR/HSS data set. Thereby, only the root data set comprising IMSI and a master key or other parameters being necessary for authentication and encryption purposes remains in the database. Optionally this root data set can be moved towards an external database in order to minimize the system resources needed. At the same time the subscriber's MSISDN's are released towards the MSISDN pool. They are marked with the subscriber's IMSI in order to keep them available for reallocation. By doing so the operator has the option for reactivation of an expired subscription.

From this time on the subscriber does not appear as an active subscriber anymore. System resources are released. An advantage is that the operator is always kept informed about the number of active and inactive subscribers in the telecommunication system using the service interface to the HLR/HSS. License costs that depend on the number of subscribers can be adjusted accordingly. In case of complete subscription removal, it is possible to remove the root data set using the provisioning interface. It is also possible to remove the correlation between the MSISDN and IMSI in the MSISDN pool by issuing a command at the provisioning interface.

If a prepaid subscriber that has been partially removed from the HLR/HSS for activity reasons becomes active again his account can automatically by re-provisioned. A subscriber can become active again by, for example, turning on the headset and registering to the network for example. The re-provisioning is identical to the automatic provisioning procedure as described above for self-provisioning.

The association between the subscribers IMSI and the MSISDN in the MSISDN pool guarantee that the subscriber will be provisioned with the MSISDN that he had before.

Certain profile settings of the subscription are lost in the procedure of removal and restoration. They have to be reentered by the subscriber again. Such profile settings can comprise call forwarding settings or call barring settings or something like that. Optionally the subscriber can be informed about the loss of certain profile settings by issuing a short message.

The partial removal of subscription data for inactive subscribers does save a considerable amount of HLR/HSS resources. It is avoided that a subscription data set of inactive subscribers do consume HLR/HSS resources and do generate license costs.

In some countries it is illegal to remove subscriptions even after an extended period of inactivity. This is for instance valid for Germany. The option of automatic restoration of removed data sets on demand avoids legal problems of this sort.

An advantage for both methods of processing subscriber related data is that the methods can be useful to the entity HLR/HSS as defined in 3GPP in general. However, the advantages take even greater effect, if the invention is applied to a separated HLR/HSS architecture comprising several HLR's/HSS's which are accessing the same data base.

## Claims

1. A method for processing of subscriber related data in a telecommunication network, comprising the steps of:
- creating a root data set comprising an unique identification (IMSI) that is associated with a subscriber (10) and at least one parameter being necessary for authentication and encrypting purposes in the telecommunication network, wherein the root data set is associated to the subscriber (10);
- storing the root data set in a database being accessible by a component (13) of the telecommunication network;
- provisioning of subscriber related data being necessary for the subscriber (10) for using services of the telecommunication network when the subscriber (10) tries to register to the telecommunication network for using services of the telecommunication network; and
- storing the provisioned subscriber related data in the database wherein the root data set is completed with the subscriber related data to a subscriber data set.

2. The method according to claim 1, wherein the step of provisioning of subscriber related data comprises an authentication of the subscriber (10) to the communication network thereby using data of the root data set.

3. The method according to claim 1 or 2, wherein the step of provisioning of subscriber related data comprises
- sending a message to the component (13) of the telecommunication network by the subscriber (10) for trying to register to the network;
- accessing the database by the component (13) and searching for the subscriber data set for this specific subscriber (10), wherein, if the subscriber data set can not be found, it is checked whether a root data set for this specific subscriber (10) can be found; and
- creating subscriber related data, in case the root data set could be found.

4. The method according to the preceding claims, wherein the step of provisioning of subscriber related data is only executed after a successful authentication of the subscriber (10) to the communication network.

5. The method according to one of the preceding claims, wherein the subscriber related data to be provisioned comprises a number which is used to refer to a particular subscriber (10) and which is taken from a number pool.

6. The method according to one of the claims 1 to 4, wherein the subscriber related data to be provisioned comprises a number which is used to refer to a particular subscriber (10) and which already has been assigned to the subscriber (10) and which is retrieved from the number pool using the identification as a key.

7. The method according to one of the preceding claims, wherein the subscriber related data are created by using one of an amount of predefined subscription templates.

8. The method according to claim 7, wherein one of the amount of predefined subscription templates is used for the provision of subscriber related data which already has been assigned to the subscriber (10).

9. A method for processing of subscriber related data in a telecommunication network, comprising the steps of:
- providing a subscriber data set associated to a subscriber's (10) subscription having
- a root data set comprising an unique identification (IMSI) that is associated with a subscriber (10) and at least one parameter being necessary for authentication and encrypting purposes, and
- subscriber related data,
wherein the subscriber data set is stored in a database being accessible by a component (13) of the telecommunication network;
- observing for a command indicating that a particular subscription of a subscriber (10) has to be removed; and
- removing of the subscriber related data from the subscriber data set stored in the database when receiving the command in order that the root data set remains as the subscriber data set.

10. The method according to claim 9, wherein the command is generated automatically by the telecommunication system according to the fulfilment of a condition.

11. The method according to claim 9 and 10, wherein the root data set is moved towards a further database and stored in the further database.

12. The method according to one of the claims 9 to 11,
wherein the subscriber related data comprises a number which is used to refer to a particular subscriber (10) and which has been assigned to the subscriber (10) to use services of the telecommunication network and wherein the number is released to a number pool.

13. The method according to claim 12, wherein the released number is marked with the unique identification for keeping the number available for a reallocation.

14. The method according to one of the claims 9 to 13,
wherein the subscriber (10) having the root data set as the subscriber data set stored in the database or the further database is marked as inactive subscriber.

15. The method according to one of the claims 9 to 13,
wherein the subscriber (10) can become an active subscriber (10) by re-provisioning of its subscriber related data in the telecommunication network according to one of the claims 1 to 8.

16. A computer program product comprising program code means stored on a computer readable medium for performing the method of any one of the claims 1 to 8 when said program product is run on a computer.

17. A computer program product comprising program code means stored on a computer readable medium for performing the method of any one of the claims 9 to 15 when said program product is run on a computer.
